Europäisches Patentamt

European Patent Office

Office européen des brevets

(19)

(11) Veröffentlichungsnummer: **0 035 157**
A1

(12) **EUROPÄISCHE PATENTANMELDUNG**

(21) Anmeldenummer: **81101091.7**

(22) Anmeldetag **16.02.81**

(51) Int. Cl.³: **G 05 D 13/32**

(30) Priorität: **29.02.80 DE 3007788**

(43) Veröffentlichungstag der Anmeldung: **09.09.81** Patentblatt **81/36**

(84) Benannte Vertragsstaaten: **DE FR GB SE**

(71) Anmelder: **Linde Aktiengesellschaft, Abraham-Lincoln-Strasse 21, D-6200 Wiesbaden (DE)**

(72) Erfinder: **Eckhardt, Erich, Bahnhofstrasse 8, D-6114 Grossumstadt (DE)**

(74) Vertreter: **Schaefer, Gerhard, Dr., Linde Aktiengesellschaft Zentrale Patentabteilung, D-8023 Höllriegelskreuth (DE)**

(54) **Anordnung von hydraulischen Widerständen und Anordnung zum Erzeugen eines drehzahlabhängigen Signales.**

(57) Anordnung von hydraulischen Widerständen zum Erzeugen eines Druckgefälles in einer Flüssigkeitsströmung, wobei die Größe des Druckgefälles eine bestimmte Abhängigkeit von der Größe des Stromes haben soll und möglichst weitgehend unabhängig von der Viskosität und damit Temperatur des strömenden Mediums sein soll, wobei zu diesem Zweck eine Parallelschaltung vorgesehen ist, bei der in einem Zweig (4, 6, 7) eine blendenähnliche Drosselstelle (6) angeordnet ist und in dem anderen Zweig (5, 9, 10, 11, 12) eine zweite blendenähnliche Drosselstelle (9) und eine dritte Drosselstelle (11), deren Widerstand stark von der Viskosität des strömenden Mediums abhängig ist, hintereinander geschaltet sind.

ACTORUM AG

## Anordnung von hydraulischen Widerständen und Anordnung zum Erzeugen eines drehzahlabhängigen Signales.

Die Erfindung betrifft eine Anordnung von hydraulischen Widerständen zum Erzeugen eines Druckgefälles mit bestimmter Abhängigkeit vom den Widerstand durchströmenden hydraulischen Strom. Es ist bekannt, eine Drosselstelle in einer Leitung anzuordnen und das Druckgefälle vor und hinter der Drosselstelle zu messen. Bei konstanter Viskosität der Flüssigkeit ergibt sich eine quadratische Abhängigkeit des Meßsignales vom Strom. Der Nachteil ist, daß die Viskosität bei einer einfachen Drosselstelle nicht einen gewünschten Einfluß auf das Druckgefälle und damit das Druckmeßsignal hat.
(DE-AS 15 55 480)

Der Erfindung liegt die Aufgabe zugrunde, eine Anordnung und damit Schaltung zu finden, bei der das Druckgefälle und damit das Meßsignal für das Druckgefälle eine gewünschte Abhängigkeit von der Viskosität des strömenden Mediums hat.

Diese Aufgabe wird durch die im Kennzeichen des Anspruches 1 angegebenen Merkmale gelöst.

Eine besonders zweckmäßige Ausgestaltung ist im Anspruch 2 angegeben.

Das Druckgefälle an einer blendenartigen Drosselstelle ist sehr wenig von der Viskosität abhängig. Das Druckgefälle in einer langen dünnen Bohrung ist sehr stark von der Viskosität abhängig. Sind zwei hydraulische Leitungen zu-einander parallel geschaltet, so muß das Druckgefälle in beiden Zweigleitungen zwischen den beiden Verzweigungspunkten gleich sein. Ist also in einer Zweigleitung nur eine kurze, blendenartige Drosselstelle und in der anderen Zweigleitung eine ebensolche Drosselstelle und eine lange, dünne Bohrung hintereinandergeschaltet, so muß das Druckgefälle in der Zweigleitung, in der die kurze, blendenartige Drosselstelle und die lange, dünne Drosselstelle hintereinandergeschaltet sind, insgesamt ebenso groß sein wie das Druckgefälle in der Zweigleitung, die nur eine Drosselstelle enthält. Das bedingt, daß das Druckgefälle an der kurzen, blendenartigen Drosselstelle in der Zweigleitung, in der zwei Drosselstellen hintereinander angeordnet sind, mit zunehmender Viskosität kleiner wird, da das Druckgefälle in der langen, dünnen Bohrung mit zunehmender Viskosität größer wird und die Summe beider Druckgefälle durch das Druckgefälle an der Drosselstelle in der anderen Leitung gegeben ist. Somit wird die erwünschte Abhängigkeit des Druckmeßsignales von der Viskosität erzielt.

Die Erfindung bezieht sich aber weiterhin auch noch auf eine besonders zweckmäßige Anwendung einer solchen Anordnung. Die Erfindung bezieht sich nämlich weiterhin auf eine Anordnung bzw. Schaltung zum Erzeugen eines drehzahlabhängigen Signales mit einer Pumpe, deren Verdrängungskammervolumen unveränderbar ist, und mit einer Drosselstelle und mit einer das Druckgefälle vor und hinter der Drosselstelle messenden Einrichtung. Bei einer Anordnung der bisher bekannten Art ist bei konstanter Viskosität des von der Pumpe geförderten Mediums der von der Pumpe geförderte Strom proportional zu der Antriebsdrehzahl der Pumpe und ist entsprechend das durch das Druckgefälle an der blendenartigen Drosselstelle gegebene Signal quadratisch zu dem Strom und damit quadratisch zu der Drehzahl der Getriebeeingangswelle. Nimmt jedoch die Viskosität der Flüssigkeit ab, nehmen auch die Leckverluste in der Pumpe zu mit der Folge, daß bei niedriger Temperatur und damit hoher Viskosität der Flüssigkeit das Meßsignal zu groß wird bzw. bei hoher Temperatur und damit geringer Viskosität zu niedrig wird. Damit wird die Qualität des Meßergebnisses beeinflußt.

Der Erfindung liegt weiterhin die Aufgabe zugrunde, diesen Nachteil zu beseitigen und eine Anordnung bzw. Schaltung zu schaffen, bei der das Meßsignal, das nur von der Drehzahl abhängig sein soll, nicht von der Viskosität der geförderten Flüssigkeit abhängig ist.

Diese Aufgabe wird durch die im Kennzeichen des Anspruches 3 angegebene Anordnung, die die Anordnung gemäß Anspruch 1 mit benutzt, gelöst. Dabei ist zu beachten, daß die relative Bemessung der einzelnen Drosselstellen auf die Charakteristik der Pumpe ausgelegt ist.

Eine solche Anordnung bzw. Schaltung zum Erzeugen eines drehzahlabhängigen Signales wird oft für Steuereinrichtungen für hydrostatische Getriebe benutzt, insbesondere für sogenannte Grenzlastregelungen, bei denen dann, wenn die Drehzahl der Primär-Energiquelle, vorzugsweise einer Brennkraftmaschine, durch zu große Leistungsaufnahme des Getriebes gedrückt wird, das Getriebe durch die Regeleinrichtung - die sogenannte Grenzlaststeuereinrichtung - auf ein Übersetzungsverhältnis für kleinere Abtriebsdrehzahl eingestellt wird, so daß die Leistungsaufnahme des Getriebes geringer wird und somit die Primär-Energiequelle infolge geringerer Belastung wieder eine höhere Drehzahl erreichen kann.

Die Erfindung bezieht sich somit auch auf eine Anwendung der vorgenannten Anordnung bei einer Regeleinrichtung für ein hydrostatisches Getriebe, bei der das Signal für die Getriebeeinstellung durch das Druckgefälle an einer Drosselstelle gegeben ist, zu der eine von der Getriebeeingangswelle aus angetriebene Pumpe, deren Verdrängungskammervolumen pro Umdrehung unveränderbar ist, fördert, wobei die Aufgabe besteht, das die Getriebeeinstellung beeinflussende Signal unabhängig von der Viskosität der von der Pumpe geförderten Flüssigkeit und damit von der Temperatur, bei der die Anlage arbeitet, zu machen.

Diese Aufgabe wird durch die in Anspruch 4 angegebenen Mittel gelöst.

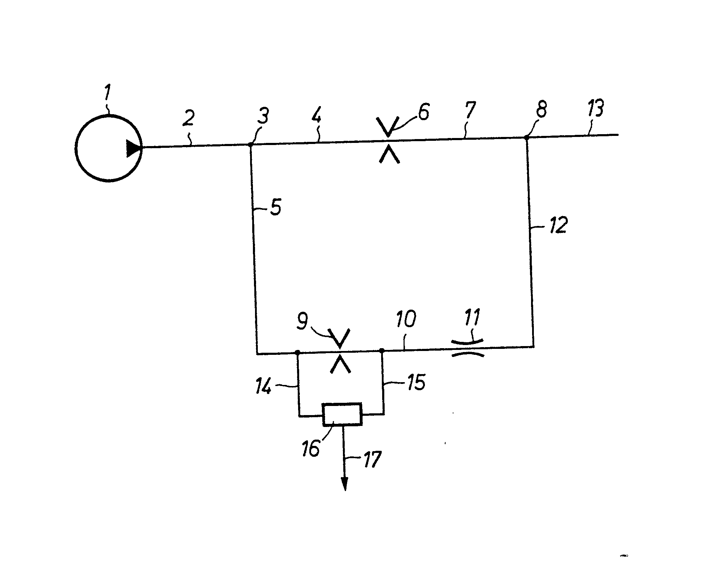

In der Zeichnung ist ein Schaltschema zu einer Anordnung gemäß der Erfindung dargestellt.

Die Konstantpumpe 1 (bei Anwendungen zu Getriebesteuerungen wie Grenzlaststeuerungen meist als "Meßpumpe" bezeichnet) fördert durch eine Leitung 2 zu einer Verzweigungsstelle 3, an der die Leitung 2 sich in eine Leitung 4 und in eine Leitung 5 verzweigt. Die Leitung 4 führt zu einer blendenartigen Drosselstelle 6, von der aus die Leitung 7 zu einem Leitungsverbindungspunkt 8 führt.

Die Zweigleitung 5 führt zu einer blendenartigen Drosselstelle 9 und die von dieser ausgehende Leitung 10 führt zu einer durch eine lange, dünne Bohrung gebildeten Drosselstelle 11. Von der Drosselstelle 11 aus führt die Leitung 12 zu dem Verbindungspunkt 8, in dem die Leitungen 7 und 12 miteinander und mit der Leitung 13 verbunden sind, wobei der gesamte durch die Leitung 2 in die Anordnung strömende Strom durch die Leitung 13 abfließt, wobei sich jedoch der durch die Leitung 2 anströmende Strom einerseits in die Leitungen 4 und 7 und andererseits in die Leitungen 15 und 12 verzweigt.

Die Drosselstelle 11 hat eine wirksame Länge "1".

An die Leitung 5 ist vor der Drosselstelle 9 eine Leitung 14 angeschlossen und an die Leitung 10 ist hinter der Drosselstelle 9 eine Leitung 15 angeschlossen. Die beiden Leitungen 14 und 15 führen zu einer Druckgefällemeßeinrichtung 16, die durch die Leitung 17 ein Meßsignal zu einer in der Zeichnung nicht mehr dargestellten Einrichtung, beispielsweise einer Einrichtung zum Einstellen eines hydrostatischen Getriebes, gibt.

Die Wirkungsweise ist folgende: Der von der Pumpe 1 durch die Leitung 2 geförderte Strom fließt in die Leitungen 4 und 5. Vor der Drosselstelle 6 baut sich in der Leitung 4 ein Druck auf, der auch in der Leitung 5 vor der Drosselstelle 9 wirkt. Hinter der Drosselstelle 6 wirkt in der Leitung 7 derselbe Druck, der auch in den Leitungen 12 und 13 wirkt. Dieser Druck ist aber nicht gleich dem Druck, der hinter der Drosselstelle 9 in der Leitung 10 wirkt, da in der Drosselstelle 11 ebenfalls ein Druckgefälle erzeugt wird. Während also in den Leitungen 4 und 5 der gleiche Druck wirkt und in den Leitungen 7 und 12 der gleiche Druck wirkt, entsteht zwischen den Leitungen 4 und 7 an der Drosselstelle 6 nicht das gleiche Druckgefälle wie zwischen den Leitungen 5 und 10 an der Drosselstelle 9. Da das Druckgefälle zwischen den Leitungen 5 und 12 durch das Druckgefälle an der Drosselstelle 6 gegeben ist, muß das Druckgefälle an der Drosselstelle 9 um so kleiner werden, je größer das Druckgefälle in der Drosselstelle 11 wird. Dieses Druckgefälle in der Drosselstelle 11 wird jedoch mit zunehmender Viskosität der strömenden Flüssigkeit größer. Mit zunehmender Viskosität nehmen jedoch auch die Leckverluste in der Pumpe 1 ab und wird somit der Förderstrom 2 und damit das Druckgefälle an der Drosselstelle 6 zwischen den Leitungen 4 und 7 bei einer bestimmten Drehzahl der Pumpe größer. Trotz dieses größer werdenden Druckgefälles zwischen den Leitungen 4 und 7 wird das Druckgefälle zwischen den Leitungen 5 und 10 nicht größer, da von dem Druckgefälle zwischen den Leitungen 5 und 12 ein größerer Teil in der Drosselstelle 11 erzeugt wird. Bei entsprechender Abstimmung der einzelnen Größen aufeinander wird somit das Druckgefälle, das in der Einrichtung 16 zwischen den Leitungen 14 und 15 und damit zwischen den Leitungen 5 und 10 gemessen wird, nicht von der Viskosität der Flüssigkeit beeinflußt sondern lediglich vom Förderstrom der Pumpe 1 und damit von der Drehzahl, mit der diese angetrieben wird.

## Patentansprüche

1. Anordnung von hydraulischen Widerständen zum Erzeugen eines Druckgefälles mit bestimmter Abhängigkeit vom Strom, gekennzeichnet durch eine Parallelschaltung (4, 6, 7 und 5, 9, 10, 11, 12), wobei in einem Zweig (4, 6, 7) eine blendenähnliche Drosselstelle (6) angeordnet ist, und in dem anderen Zweig (5, 9, 10, 11, 12) eine zweite ebensolche Drosselstelle (9) und eine dritte Drosselstelle (11), deren Widerstand stark von der Viskosität des Mediums abhängig ist, hintereinandergeschaltet sind.

2. Anordnung nach Anspruch 1, dadurch gekennzeichnet, daß die Drosselstelle (11), deren Widerstand stark von der Viskosität des Mediums abhängig ist, durch eine Bohrung gebildet ist, deren Länge ein großes Vielfaches des Durchmessers ist.

3. Anordnung zum Erzeugen eines drehzahlabhängigen Signales mit einer Konstantpumpe und einer Drosselstelle und einer das Druckgefälle vor und hinter der Drosselstelle messenden Einrichtung, dadurch gekenn-

Form. 5729 7.78

zeichnet, daß zu einer Leitung (2, 4, 7) mit einer Drosselstelle (6) eine zweite Leitung (5, 10, 12) parallelgeschaltet ist, wobei in dieser zweiten parallel geschalteten Leitung (15, 12) eine Drosselstelle (9) und eine Drosselstelle (11), deren Widerstand stark von der Viskosität des Mediums abhängig ist, hintereinandergeschaltet sind und daß das Druckgefälle vor und hinter der Drosselstelle (9) in der Zweigleitung (15, 12) das drehzahlabhängige Signal bildet.

4. Regeleinrichtung für ein hydrostatisches Getriebe, bei der das Signal für die Getriebeeinstellung durch das Druckgefälle an einer Drosselstelle gegeben ist, zu der eine von der Getriebeeingangswelle angetriebene Konstantpumpe fördert, dadurch gekennzeichnet, daß von der Förderleitung (2) der Konstantpumpe (1) zwei Zweigleitungen (4 und 5) ausgehen, wobei die Zweigleitung (4) zu einer blendenartigen Drosselstelle (6) führt, und die von dieser ausgehende Leitung (7) zu einer Ablaufleitung (13) führt und wobei die Zweigleitung (5) zu einer blendenartigen Drosselstelle (9) führt und die von dieser ausgehende Leitung (10) zu einer Drosselstelle (11), deren Widerstand von der Viskosität des Mediums abhängig ist, vorzugsweise einer Bohrung, deren Länge ein großes Vielfaches des Durchmessers ist, führt, die ablaufseitig an die Leitung (12) angeschlossen ist, die ihrerseits ebenfalls an die Ablaufleitung (13) angeschlossen ist.

1/1

CO35157

| | EINSCHLÄGIGE DOKUMENTE | | KLASSIFIKATION DER ANMELDUNG (Int. Cl.) |
|---|---|---|---|
| **Kategorie** | Kennzeichnung des Dokuments mit Angabe, soweit erforderlich, der maßgeblichen Teile | betrifft Anspruch | G 05 D 13/32 |
| | FR - A - 2 203 536 (H. KALB) <br><br> * Seite 6, Zeile 40 - Seite 8, Zeile 20; Abbildungen 4-6 * <br><br> & DE - A - 2 250 118 <br><br> & DE - A - 2 331 282 <br><br> -- | 1-4 | |
| A | GB - A - 665 610 (W.G. WILSON) <br><br> * Seite 3, Zeilen 36-80 * <br><br> -- | 1 | **RECHERCHIERTE SACHGEBIETE (Int. Cl.)** |
| A | US - A - 3 563 262 (THE PLESSEY COMPANY LTD.) <br><br> * Spalte 2, Zeile 68 - Spalte 3, Zeile 9 * <br><br> ---- | 1 | G 05 D 13/30 <br> 13/32 <br> F 15 B 21/04 <br> F 16 H 39/50 |

Der vorliegende Recnerchenbericht wurde für alle Patentansprüche erstellt.

| Recherchenort | Abschlußdatum der Recherche | Prufer |
|---|---|---|
| Den Haag | 09-06-1981 | WEIHS |

EPA form 1503.1 06.78